# EUROPEAN PATENT APPLICATION

(11) **EP 4 806 531 A1**
(43) Date of publication of application: **16.09.2026**
(21) Application number: 26154261.7
(22) Date of filing: 27.01.2026
(51) Int. Cl.: A63F 13/98, A63F 13/92, A63F 13/95, A45C 13/02

(54) **PROTECTIVE PACKAGE DEVICE**

(30) Priority: 10.03.2025 CN 202520408851 U
(71) Applicant: Shenzhen DeOne Innovation Technology Co., Ltd, Shenzhen, Guangdong 518000 (CN)
(72) Inventor: HE, BEIJING, Shenzhen, 518000 (CN); XIE, HUAYONG, Shenzhen, 518000 (CN); YU, LEI, Shenzhen, 518000 (CN)
(74) Representative: Metida

(57) **Abstract**

A protective package device, configured to protect a device, includes a first housing comprising a first receiving chamber for receiving the device; a second housing comprising a second receiving chamber. Wherein the first housing is capable of being assembled to the second receiving chamber, with the first receiving chamber facing to the second receiving chamber; and at least one storage unit is provided on one side of the second housing facing the second receiving chamber, and the at least one storage unit is used to store cards.

## Description

### CROSS-REFERENCE TO RELATED APPLICATIONS

### TECHNICAL FIELD

The present application relates to the field of package technology, particularly to a protective package device for electronic devices and cards.

### BACKGROUND

Protective package devices are used to protect electronic devices, such as electronic game consoles, or mobile phones. Take the electronic game consoles for example, traditional game consoles can only play one game, with the rise of the gaming and entertainment industry, there are more and more types of electronic games available. When users want to switch to a new game, they need to purchase a new game console, resulting in a higher cost of switching to a new game. Therefore, plug-in game consoles emerged, where one game card corresponds to one game, and games can be replaced by changing the game card inserted into the game console. When users want to play multiple games outside, they need to separately store the game console and game card in their respective storage devices. The two storage devices have a large volume, which is inconvenient for users to carry and easy to forget to carry the storage device that contains the game card, making it inconvenient for users to change games.

### SUMMARY

The present invention aims at providing a protective package device that addresses the deficiencies and shortcomings of existing technology; by installing a storage unit on the second housing, the card can be accommodated in the protective package device that has already contained the device to be protected, making it easier for users to carry both the device to be protected and the card; furthermore, by setting the storage unit located on the side of the second housing near the first housing to prevent card loss.

A protective package device, configured to protect a device, includes a first housing comprising a first receiving chamber for receiving the device; a second housing comprising a second receiving chamber. Wherein the first housing is capable of being assembled to the second receiving chamber, with the first receiving chamber facing to the second receiving chamber; and at least one storage unit is provided on one side of the second housing facing the second receiving chamber, and the at least one storage unit is used to store at least one card.

Beneficial effects of the present utility model are as follows: by assembling the device to be protected into the first housing, then assembling the first housing into the second housing, and setting at least one storage unit for storing cards in the second housing, the card and the device to be protected are stored together, making it easier for users to carry both the device to be protected and the card at the same time. Compared with setting the storage unit on the outside of the first housing or the second housing, setting the storage unit on the side of the second housing close to the first housing, the card in the storage state is located in the storage cavity formed by the joint construction of the first housing and the second housing, which can prevent the card from being lost in the storage state.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.
FIG. 1 is a schematic perspective view of a protective package device according to a first embodiment of the present disclosure.
FIG. 2 is an exploded view of the protective package device of FIG. 1.
FIG. 3 is a cross sectional view along A-A' of the protective package device of FIG. 1.
FIG. 4 is a cross sectional view along B-B' of the protective package device of FIG. 1.
FIG. 5 is a cross sectional view along C-C' of the protective package device of FIG. 1.
FIG. 6 shows a second housing of the protective package device according to the first embodiment of the present disclosure.
FIG. 7 is a cross sectional view along D-D' of the protective package device of FIG. 6.
FIG. 8 shows a second housing of a protective package device according to a second embodiment of the present disclosure.
FIG. 9 is a cross sectional view along E-E' of the protective package device of FIG. 8.
FIG. 10 is a cross sectional view along F-F' of the protective package device of FIG. 8.

### Drawing references:

Elements and References: first housing 10; first main body 11; first extension part 12; first avoidance hole 121; first receiving chamber 13; second housing 20; second main body 21; avoidance unit 211; avoidance body 2111 avoidance portion 2112; avoidance blind hole 21121; contact unit 212; avoidance space 213; first clamping portion 22; second avoidance hole 221; second clamping portion 23; guide part 24; first groove 241; second receiving chamber 25; supporting leg 26; storage unit 27; first limiting portion 271; first guiding slope 2711; second limiting portion 272; second guiding slope 2721; third limiting portions 273; third guiding slope 2731; fourth guiding slope 2732; first limiting unit 28; second limiting unit 29; protective pad 30; through hole 31; avoidance groove 32; card 40; first direction X; second direction Y; third direction Z.

### DETAILED DESCRIPTION OF THE EMBODIMENTS

The accompanying drawings in the embodiment of the present disclosure are combined, The technical scheme in the embodiment of the present disclosure is clearly and completely described, Obviously, the described embodiment is only a part of the embodiment of the present disclosure, but not all embodiments are based on the embodiment of the present disclosure, and all other embodiments obtained by ordinary technicians in the field on the premise of not doing creative work belong to the protection range of the present disclosure.

In order to make the above objectives, features, and advantages of the present application more obvious and understandable, the following will provide further detailed explanations of the present application in conjunction with the accompanying drawings and specific implementation methods.

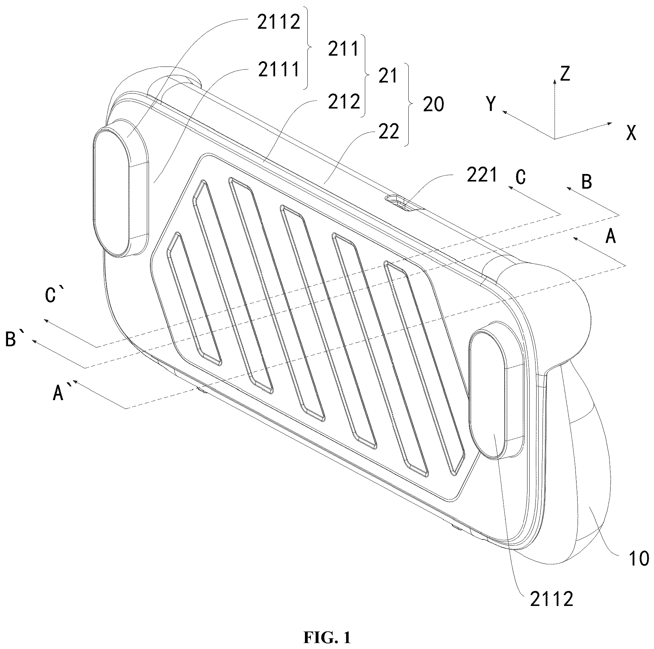

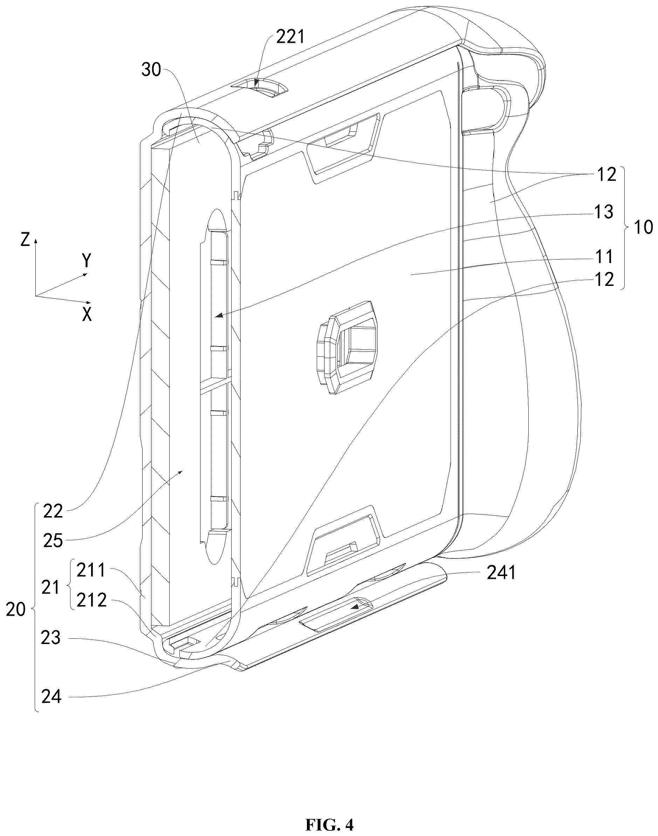

Referring to FIGS. 1-7, this embodiment relates to a protective package device used to protect a device to be protected. The protective package device includes a first housing 10 and a second housing 20. The first housing 10 is provided with a first receiving chamber 13 for receiving the device to be protected; the second housing 20 is provided with a second receiving chamber 25. The first housing 10 is capable of being assembled to the second receiving chamber 25, with the first receiving chamber 13 facing to the second receiving chamber 25; and at least one storage unit 27 is provided on one side of the second housing 20 facing the second receiving chamber 25, and the at least one storage unit 27 is used to store at least one card 40.

In particular, the device to be protected is assembled into the first receiving chamber 13 along a first direction X. The first housing 10 is assembled to the second receiving chamber 25 in a direction opposite to the first direction X. At least one storage unit 27 is provided on one side of the second housing 20 near the first housing 10. The at least one storage unit 27 is assembled to the storage unit 27 along the direction opposite to the first direction X.

In this embodiment, the first housing 10 is detachably assembled to the second housing 20, i.e., the first housing 10 can be totally separated from the second housing 20. The device to be protected is an electronic game console, and the card 40 may be game cards or memory cards that need to be inserted and used in electronic devices. The at least one storage unit 27 can be one storage unit 27 or a plurality of storage units 27, such as ten storage units. In other embodiments, the protective package device may be used to protect other electronic devices, such as mobile phones, with card insertion capabilities.

### First Embodiment:

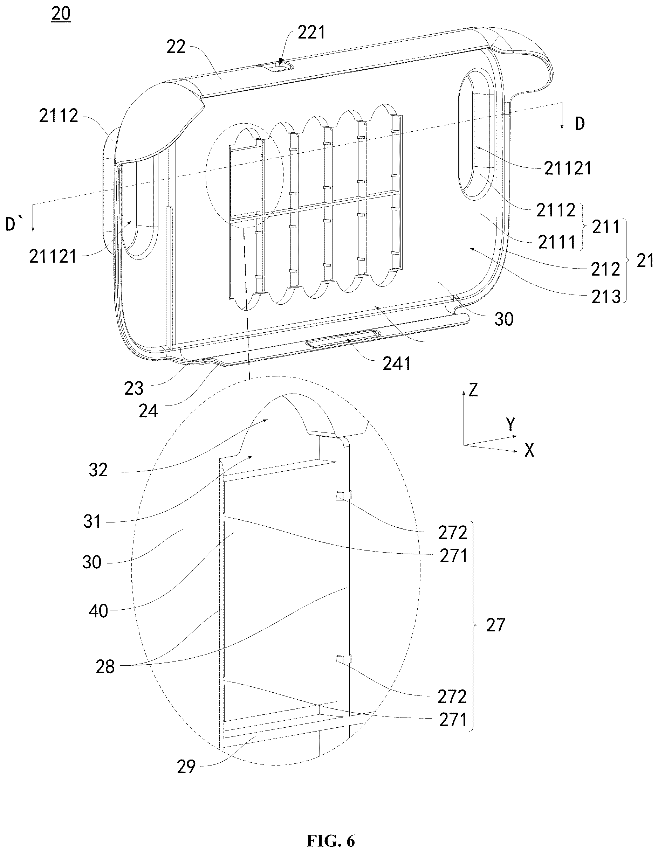

As shown in FIGS. 6-7, each of the storage units 27 includes at least one first limiting portion 271 and at least one second limiting portion 272. The at least one first limiting portion 271 and the at least one second limiting portion 272 both extend along the first direction X, and the at least one first limiting portion 271 and the at least one second limiting portion 272 are spaced apart along the second direction Y, which is perpendicular to the first direction X. Among them, the at least one first limiting portion 271 and the at least one second limiting portion 272 are respectively configured to contact with opposite ends of the card 40 in the second direction Y, to assemble the card 40 between the at least one first limiting portion 271 and the at least one second limiting portion 272 in the direction opposite to the first direction X. By clamping the opposite ends of the card 40 with the at least one first limiting portion 271 and the at least one second limiting portion 272, and fitting them with the card 40 through interference fit, the relative position between the card 40 and the second housing 20 is fixed.

Preferably, as shown in FIGS. 6-7, each of the storage units 27 includes at least two first limiting portions 271 and at least two second limiting portions 272. The two first limiting portions 271 are spaced apart along a third direction Z, and the two first limiting portions 271 are configured to contact with a same side of the card 40. The two second limiting portions 272 are spaced apart along the third direction Z, and the two second limiting portions 272 are configured to contact with a same another side of the card 40. Among them, the third direction Z is perpendicular to the second direction Y, and the third direction Z is perpendicular to the first direction X. By setting two first limiting portions 271 at intervals along the third direction Z, and two second limiting portions 272 at intervals along the third direction Z, thus at least two limiting portions are set on each side of the card 40. Compared to the scheme of setting only one limiting portion on each side of the card 40, the scheme of two limiting portions on each side of the card 40, can prevent the card 40 from swinging left and right during fixation, enhancing the stability of the second housing 20 and the card 40 fixation.

In one embodiment, there are at least two storage units 27 arranged along the second direction Y, and a first limiting unit 28 is provided between adjacent storage units 27. The first limiting unit 28 extends at least partially along the third direction Z, and is used to separate adjacent two storage units 27. Among them, the third direction Z is perpendicular to the second direction Y, and the third direction Z is perpendicular to the first direction X. The first limiting unit 28 extends at least partially along the first direction X. By placing the first limiting unit 28 between adjacent two storage units 27 along the second direction Y, the two storage units 27 are visually and physically divided, effectively preventing the cards 40 in multiple storage units 27 from interfering with each other and facilitating users to find the cards 40.

In another embodiment, there are at least two storage units 27 arranged along the third direction Z. The third direction Z is perpendicular to the second direction Y, and the third direction Z is perpendicular to the first direction X. A second limiting unit 29 is arranged between adjacent storage units 27 along the third direction Z. The second limiting unit 29 extends at least partially along the second direction Y, and the second limiting unit 29 extends at least partially along the first direction X. The second limiting unit 29 is used to separate the two storage units 27 along the third direction Z. By placing the second limiting unit 29 between adjacent two storage units 27 along the third direction Z, the two storage units 27 are visually and physically divided, effectively preventing interference between the cards 40 in multiple storage units 27 and facilitating user search for the cards 40.

In this embodiment, there are ten storage units 27, of which every five are divided into groups, totaling two groups along the third direction Z. The storage units 27 in each group are arranged along the second direction Y, and there is one first limiting unit 28 between adjacent two storage units 27 in the group along the second direction Y. In addition, there is one first limiting unit 28 located on the side of the storage unit 27 at the beginning of the group and at the end of the group, away from other storage units 27. Viewed from third direction Z, two groups of storage units 27 are arranged along the third direction Z, and the two groups of storage units 27 has one second limiting unit 29 arranged therebetween.

In other embodiments, the storage units 27 can be divided into more groups, or more storage units 27 can be provided, and they can be divided into more groups, one second limiting unit 29 can be located at one side of the storage unit 27 at a first group away from other storage units 27, and one second limiting unit 29 can be located at one side of the storage unit 27 at a last group away from other storage units 27.

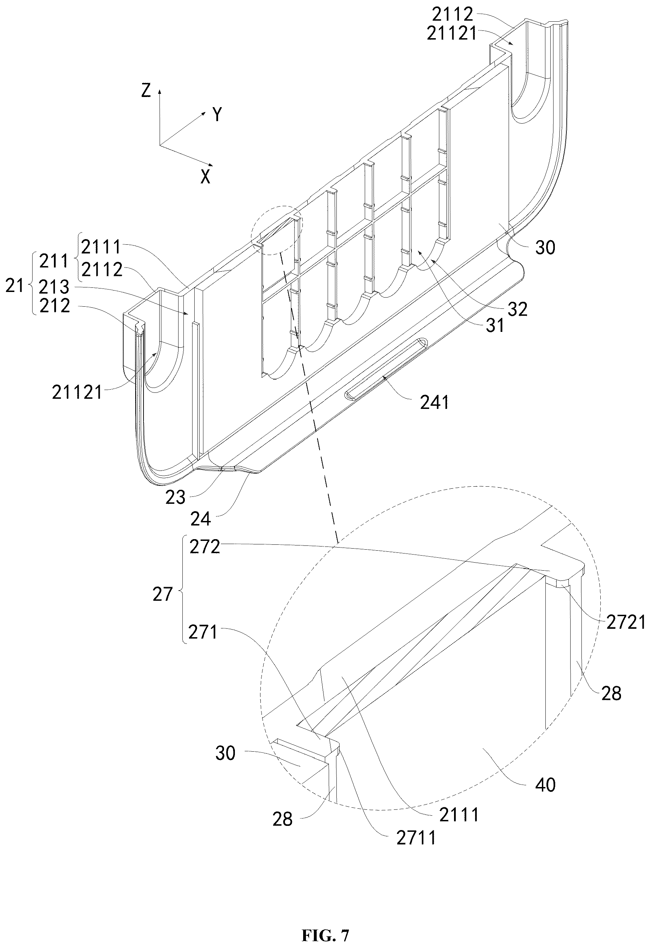

The second limiting portion 272 and the first limiting portion 271 have guiding slopes, preferably, as shown in FIG. 7, viewed from the second limiting portion 272 to the first limiting portion 271 along a direction opposite to the second Y direction (i.e., stand on the side of second limiting portion 272 to see the first limiting portion 271), the size of the first limiting portion 271 in the first direction X gradually increases to form a first guiding slope 2711 at the end of the first limiting portion 271 away from the second housing 20. The first guiding slope 2711 makes the assembly of card 40 more convenient. Viewed from the first limiting portion 271 to the second limiting portion 272 along the second Y direction (i.e., stand on the side of first limiting portion 271 to see the second limiting portion 272), the size of the second limiting portion 272 gradually increases in the first direction X to form a second guiding slope 2721 at the end of the second limiting portion 272 away from the second housing 20. The second guiding slope 2721 makes the assembly of card 40 more convenient.

In the process of assembling card 40 from the direction opposite to the first direction X, if card 40 is not aligned with a correct assembly position, the first guiding slope 2711 or the second guiding slope 2721 will come into contact with one side of card 40 to guide card 40 to the correct assembly position. Due to the assembly of card 40 requiring an interference fit between card 40 and the first and second limiting portions 271 and 272, the size of card 40 is slightly greater than the size of the assembly position, during the assembly of card 40 from the direction opposite to the first direction X, one or more of the first limiting portion 271, second limiting portion 272, and card 40 are deformed, resulting in an interference fit between card 40 and the first and second limiting portions 271 and 272, thereby fixing the relative position of card 40 with the second housing 20. By setting the first guiding slope 2711 and the second guiding slope 2721, it facilitates the deformation of one or more of the first limiting portion 271, the second limiting portion 272, and the card 40, in order to facilitate the assembly of the card 40 to the assembly position.

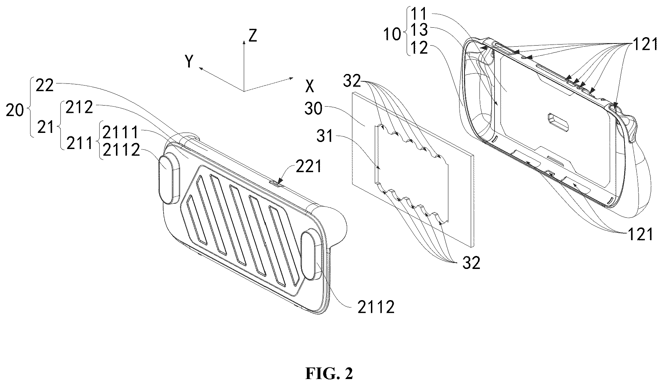

As shown in FIGS. 2-7, the protective package device also includes a protective pad 30. The protective pad 30 is set on the side of the second housing 20 near the first housing 10. The protective pad 30 is provided with a through hole 31, which is used to avoid the storage unit 27 and place the protective pad 30 on an outer edge of the storage unit 27. The size of protective pad 30 in the first direction X is greater than the size of the first limiting portion 271 and the second limiting portion 272 in the first direction X.

Due to the fact that the side of the second housing 20 close to the first housing 10 faces a display area of the device to be protected, the first limiting portion 271 and the second limiting portion 272 are set on the side of the second housing 20 near the first housing 10. When the protective package device is compressed, the second housing 20 is subjected to force and deforms towards the first housing 10, that is, the second housing 20 deforms along the first direction X, which can easily cause the first limiting portion 271 and the second limiting portion 272 to touch the display area. At the same time, the first limiting portion 271 and the second limiting portion 272 may move vertically along the first direction X during the compression process, which can easily cause scratches or even damage to the display area. In order to solve the problem, the following scheme is suggested.

By setting the size of the protective pad 30 in the first direction X to be greater than the size of the first limiting portion 271 and the second limiting portion 272 in the first direction X, the protective pad 30 touches the display area of the device to be protected before the first limiting portion 271 and the second limiting portion 272. When the second housing 20 is further compressed and deformed, the protective pad 30 is compressed in the first direction X, providing support in the opposite direction of the first direction X, thereby reducing the deformation of the second housing 20 in the first direction X to prevent the first limiting portion 271 and the second limiting portion 272 from touching the display area of the device to be protected.

As shown in FIG. 2 and FIGS. 6-7, the protective pad 30 is provided with an avoidance groove 32, which is close to the storage units 27 and is in communication with the through hole 31 for easy access for the cards 40 to be stored in the storage units 27.

In this embodiment, the opening of the avoidance groove 32 faces the second direction Y or an opposite direction of the second direction Y. Specifically, the avoidance groove 32 is semi-circular and is used to avoid fingers extending in the direction opposite to the first direction X. The fingers can extend into the avoidance groove 32, then extend into the through hole 31 of the avoidance storage unit 27, thereby inserting the fingers between the card 40 and the second housing 20, then the fingers can pull out the card 40 along the first direction X.

Specifically, an opening of the avoidance groove 32 faces the side of the storage unit 27 where the first limiting unit 28 or the second limiting unit 29 is not provided.

As shown in FIGS. 1-5, the first housing 10 includes a first main body 11 and a first extension part 12. The first extension part 12 is set at an outer edge of the first main body 11 and extends in the direction opposite to the first direction X to an edge of the side of the device to be protected facing away from the first main body 11. The first main body 11 and the first extension part 12 cooperatively form the first receiving chamber 13.

The second housing 20 includes a second main body 21, a first clamping portion 22, and a second clamping portion 23. The first clamping portion 22 and the second clamping portion 23 are respectively arranged at opposite ends of the second main body 21 and extend along the first direction X. The second main body 21, the first clamping portion 22, and the second clamping portion 23 cooperatively form the second receiving chamber 25. The direction from the second clamping portion 23 toward the first clamping portion 22 is the third direction Z, which is perpendicular to the first direction X.

Viewed from the first direction X, the first clamping portion 22 first extends in the third direction Z, and then extends in the opposite direction of the third direction Z. Viewed from the first direction X, the second clamping portion 23 extends in the opposite direction of the third direction Z, and then extends in the third direction Z, allowing the first clamping portion 22 and the second clamping portion 23 clamp the opposite ends of the first extension part 12 to clamp and assemble the first housing 10 into the second receiving chamber 25.

Specifically, the first extension part 12 is provided with at least one first avoidance hole 121, which is used to avoid the heat dissipation holes, clamping slots, video interfaces, audio interfaces, power interfaces, buttons and other components of the device to be protected. The first clamping portion 22 is provided with at least one second avoidance hole 221, which is used to avoid components such as power interfaces.

As shown in FIGS. 1-5, the second main body 21 includes an avoidance unit 211 and a contact unit 212. The contact unit 212 is located at an outer edge of the avoidance unit 211 and is connected to the first and second clamping portions 22 and 23. The contact unit 212 extends at least partially along the first direction X and is used to contact the first extension part 12. The contact unit 212 and the avoidance unit 211 cooperatively form an avoidance space 213.

The avoidance unit 211 includes an avoidance body 2111 and at least one avoidance portion 2112. The avoidance body 2111 is connected to the contact unit 212, and the avoidance portion 2112 is set on the side of the avoidance body 2111 away from the first housing 10, extending in the direction opposite to the first direction X. The avoidance part 2112 and the avoidance body 2111 jointly have avoidance blind holes 21121, which face the avoidance space 213 and are connected to the avoidance space 213.

In this embodiment, the device to be protected has a joystick extending in the direction opposite to the first direction X. The avoidance blind hole 21121 is used to avoid the joystick, so that the avoidance main body 2111 can better fit the device to be protected, thereby making the overall volume of the protection device smaller and more compact.

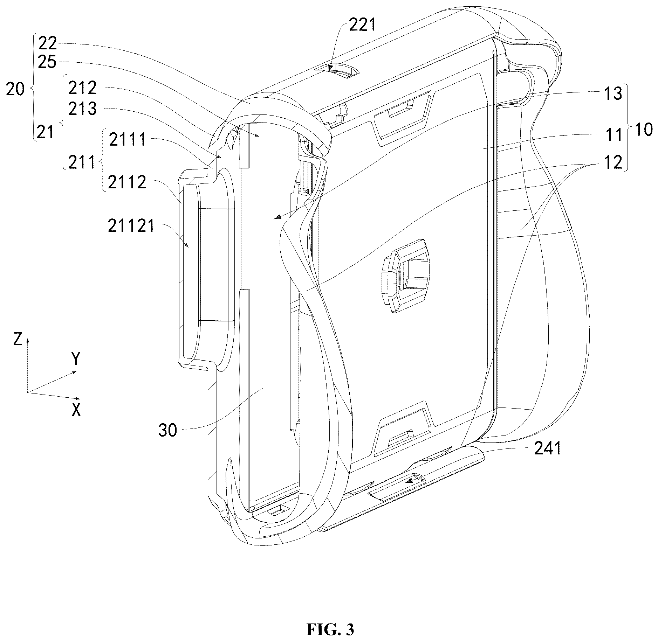

As shown in FIGS. 3-5, the second clamping part 23 is provided with a guide part 24 at one end away from the second main body 21. The guide part 24 extends at least partially along the first direction X, at least partially along the second direction Y, and at least partially along the opposite direction of the second direction Y.

By setting the guide part 24 to extend at least partially along the second direction Y and at least partially in the opposite direction of the second direction Y, the guide part 24 is arranged in an inverted U-shape, making it easier for users to open the guide part 24 and then open the second clamping part 23, thereby disassembling the second housing 20 and the first housing 10.

The end of the guide part 24 away from the second clamping part 23 is provided with a first groove 241, and an opening of the first groove 241 faces the first direction X. Through the setting of the first groove 241, the first groove 241 is used for users to insert their hands into the first groove 241, so as to facilitate users to open the guide part 24, that is, to open the second clamping part 23.

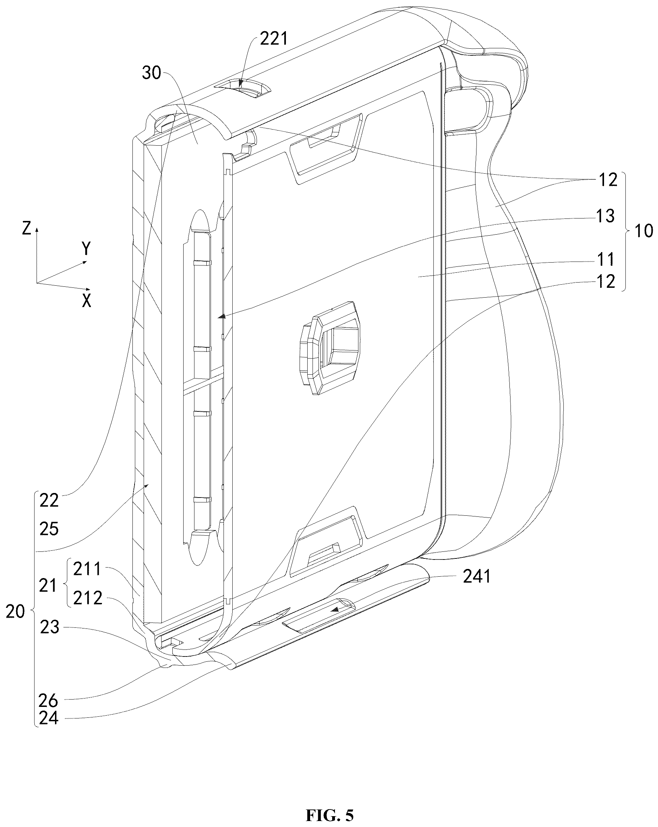

As shown in FIG. 5, the second clamping part 23 is equipped with at least two supporting legs 26. The supporting leg 26 extends at least partially in the opposite direction of the third direction Z, and the guide part 24 extends at least partially in the third direction Z, which is perpendicular to the first direction X and perpendicular to the second direction Y. The end of the supporting leg 26 away from the first clamping part 22 is flush with the end of the guide part 24 away from the first clamping part 22. By setting the support leg 26 flush with the guide part 24, the protective package device can be placed on the desktop, that is, upright on the desktop.

### Second Embodiment:

Compared to the first embodiment, the difference lies in the setting of the storage unit.

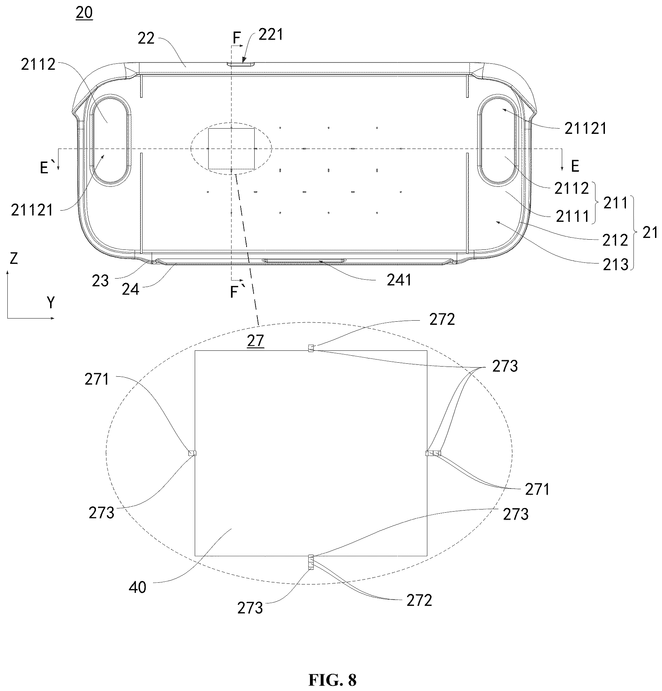

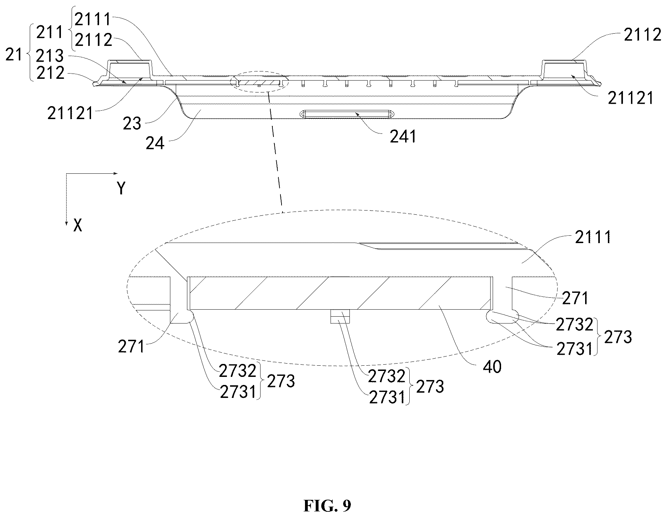

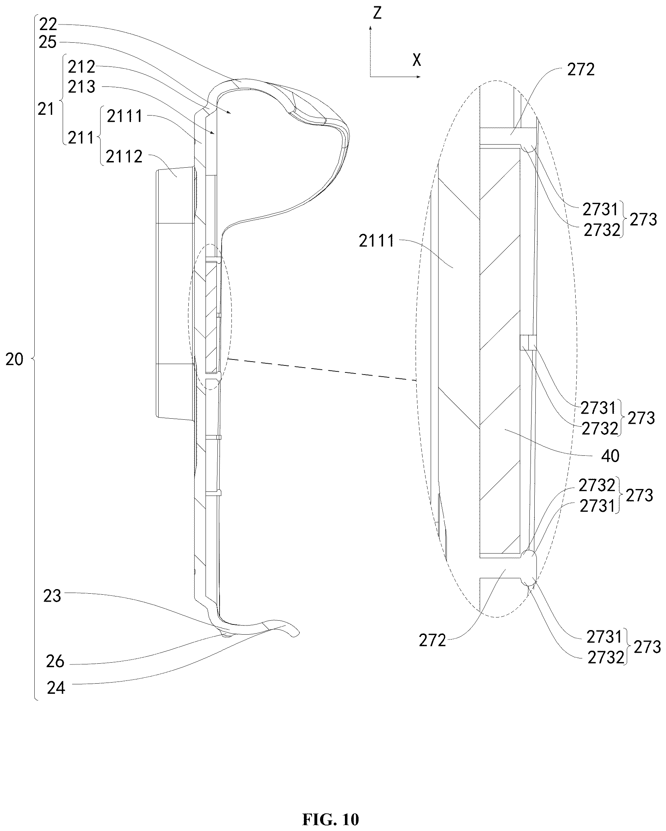

As shown in FIGS. 8-10, in the second embodiment, the storage unit 27 includes at least two first limiting portions 271, at least two second limiting portions 272, and at least four third limiting portions 273. The first limiting portion 271 extends along the first direction X, and the two first limiting portions 271 are spaced apart along the second direction Y, the second direction Y is perpendicular to the first direction X. The second limiting portion 272 extends along the first direction X, and the two second limiting portions 272 are spaced apart along the third direction Z, the third direction Z is perpendicular to the first direction X and perpendicular to the second direction Y. Each third limiting portion 273 is respectively set at one end of each of the two first limiting portions 271 away from the second housing 20 and one end of each of the two second limiting portions 272 away from the second housing 20, and the two third limiting portions 273 extend towards each other, with the third limiting portions 273 are spaced apart from the second housing 20.

Among them, the card 40 is assembled between the third limiting portion 273 and the second housing 20 in the direction opposite to the first direction X. The two first limiting portions 271 limit the displacement of the card 40 in the second direction Y, and the two second limiting portions 272 limit the displacement of the card 40 in the third direction Z. Specifically, card 40 is assembled in the space between the third limiting portion 273 and the second housing 20.

As shown in FIGS. 8-10, in the direction where the first limiting portion 271 towards another first limiting portion 271, the size of the third limiting portion 273 located in the former gradually decreases in the first direction X, forming a third guiding slope 2731 at the end of the third limiting portion 273 away from the second housing 20, and a fourth guiding slope 2732 at the end of the third limiting portion 273 near the second housing 20.

Similarly, in the direction where the second limiting portion 272 towards another second limiting portion 272, the size of the third limiting portion 273 located in the former gradually decreases in the first direction X, forming a third guiding slope 2731 at the end of the third limiting portion 273 away from the second housing 20, and a fourth guiding slope 2732 at the end of the third limiting portion 273 near the second housing 20.

By forming a third guiding slope 2731 at one end of the third limiting portion 273 away from the second housing 20, it facilitates the installation of the card 40. By forming a fourth guiding slope 2732 at one end of the third limiting portion 273 near the second housing 20, it facilitates the disassembly of the card 40.

In the process of assembling card 40, if card 40 is not aligned with the assembly position, the third guiding slope 2731 will contact one side of card 40 to guide the card 40 to the assembly position. Due to the assembly of card 40 requiring an interference fit between card 40 and the third limiting portion 273, the size of card 40 is slightly larger than the size of the assembly position. During the assembly of card 40, one or more of the third limiting portion 273 and card 40 deform, resulting in an interference fit between card 40 and the third limiting portion 273, thereby fixing the relative position of card 40 and the second housing 20. By setting the third guiding slope 2731, it facilitates the deformation of one or more of the third limiting portion 273 and the card 40, in order to facilitate the assembly of the card 40 to the assembly position.

In the process of disassembling the card 40, if the card is not in a correct disassembly position, the fourth guiding slope 2732 will contact one side of the card 40 to guide the card 40 to the disassembly position. By setting the fourth guiding slope 2732, it is convenient for one or more of the third limiting portion 273 and the card 40 to deform, facilitating the disassembly of the card 40.

The above descriptions are only preferred embodiments of the present disclosure, and are not intended to limit the patent scope of the present disclosure. Any equivalent structural transformation made by using the content of the specification and the drawings of the present disclosure under the invention idea of the present disclosure, directly or indirectly applied to other related technical fields, shall all be included in the scope of patent protection of the present disclosure.

## Claims

1. A protective package device, configured to protect a device to be protected, comprising:
a first housing (10) comprising a first receiving chamber (13) for receiving the device to be protected;
a second housing (20) comprising a second receiving chamber (25);
wherein the first housing (10) is capable of being assembled to the second receiving chamber (25), with the first receiving chamber (13) facing to the second receiving chamber (25); and
the second housing (20) further comprises at least one storage unit (27) provided on one side thereof facing the second receiving chamber (25), and the at least one storage unit (27) is used to store at least one card.

2. The protective package device according to claim 1, wherein the at least one storage unit (27) comprises at least one first limiting portion (271) and at least one second limiting portion (272); the at least one first limiting portion (271) and the at least one second limiting portion (272) both extend along a first direction, and the at least one first limiting portion (271) and the at least one second limiting portion (272) are spaced apart along a second direction, which is perpendicular to the first direction;
wherein the at least one first limiting portion (271) and the at least one second limiting portion (272) are respectively configured to be in contact with opposite ends of the at least one card in the second direction.

3. The protective package device according to claim 2, wherein the at least one first limiting portion (271) comprises two first limiting portions (271), and at least one second limiting portion (272) comprises two second limiting portions (272); the two first limiting portions (271) are spaced apart along a third direction, and the two first limiting portions (271) are configured to be in contact with a same side of the at least one card (40); the two second limiting portions (272) are spaced apart along the third direction, and the two second limiting portions (272) are configured to be in contact with a same another side of the at least one card (40);
wherein, the third direction is perpendicular to the second direction, and the third direction is perpendicular to the first direction.

4. The protective package device according to claim 2, wherein the at least one storage unit (27) comprises at least two storage units (27) arranged along the second direction, and a first limiting unit (28) is provided between adjacent storage units (27) along the second direction; the first limiting unit (28) extends at least partially along a third direction, and is used to separate adjacent two storage units (27) along the second direction;
wherein, the third direction is perpendicular to the second direction, and the third direction is perpendicular to the first direction.

5. The protective package device according to claim 2, wherein the at least one storage unit (27) comprises two storage units (27) arranged along a third direction; the third direction is perpendicular to the second direction, and the third direction is perpendicular to the first direction; a second limiting unit (29) is installed between adjacent storage units arranged along the third direction; the second limiting unit (29) extends at least partially along a second direction, and is used to separate adjacent two storage units (27) along the third direction.

6. The protective package device according to claim 2, wherein viewed from the second limiting portion (272) to the first limiting portion (271) along a direction opposite to the second direction, a size of the first limiting portion (271) in the first direction gradually increases to form a first guiding slope (2711) at an end of the first limiting portion away from the second housing (20); and
viewed from the first limiting portion (271) to second limiting portion (272) along the second direction, a size of the second limiting portion (272) gradually increases in the first direction to form a second guiding slope (2721) at the end of the second limiting portion (272) away from the second housing (20).

7. The protective package device according to claim 2, further comprising a protective pad (30), the protective pad (30) is set on a side of the second housing (20) near the first housing (10); and the protective pad (30) is provided with a through hole (31), which is used to avoid the storage unit (27) and place the protective pad (30) on an outer edge of the storage unit (27);
a size of protective pad (30) in the first direction is greater than a size of each of the first limiting portion (271) and the second limiting portion (272) in the first direction.

8. The protective package device according to claim 7, wherein the protective pad (30) is further provided with an avoidance groove (32), which is near the storage units (27) and in communication with the through hole (31) for easy access for the at least one card (40) to be stored in the at least one storage unit (27).

9. The protective package device according to claim 1, wherein the first housing (10) comprises a first main body (11) and a first extension part (12); the first extension part (12) is set at an outer edge of the first main body (11) and extends in a direction to an edge of a side of the device to be protected facing away from the first main body (11); the first main body (11) and the first extension part (12) cooperatively forming the first receiving chamber (13).

10. The protective package device according to claim 1, wherein the second housing (20) comprises a second main body (21), a first clamping portion (22), and a second clamping portion (23); the first clamping portion (22) and the second clamping portion (23) are respectively arranged at opposite ends of the second main body (21) and extend along a first direction; the second main body (21), the first clamping portion (22), and the second clamping portion (23) cooperatively form the second receiving chamber (25).

11. The protective package device according to claim 10, wherein the direction from the second clamping portion (23) toward the first clamping portion (22) is a third direction, which is perpendicular to the first direction; viewed from the first direction, the first clamping portion (22) first extends in the third direction, and then extends in an opposite direction of the third direction; in the first direction, the second clamping portion (23) extends in an opposite direction of the third direction, and then extends in the third direction, allowing the first clamping portion (22) and the second clamping portion (23) clamp the opposite ends of the first extension part (12) to clamp and assemble the first housing (10) into the second receiving chamber (25).

12. The protective package device according to claim 11, wherein the second main body (21) comprises an avoidance unit (211) and a contact unit (212); the contact unit (212) is located at an outer edge of the avoidance unit (211) and is connected to the first and second clamping portions (22, 23); the contact unit (212) extends at least partially along the first direction and is used to contact the first extension part (12); and the contact unit (212) and the avoidance unit (211) cooperatively form an avoidance space (213).

13. The protective package device according to claim 1, wherein the at least one storage unit (27) includes at least two first limiting portions (271), at least two second limiting portions (272), and at least four third limiting portions (273); each of the first limiting portions (271) extends along a first direction, and the two first limiting portions (271) are spaced apart along a second direction, each of the second limiting portions (272) extends along the first direction, and the at least two second limiting portions (272) are spaced apart along a third direction, the second direction is perpendicular to the first direction, the third direction is perpendicular to the first direction and perpendicular to the second direction; each of the third limiting portions (273) is arranged at an end of each of the first limiting portions (271) or the second limiting portions (272) away from the second housing (20).

14. The protective package device according to claim 13, wherein in a direction where one of the first limiting portions (271) towards another one of the first limiting portions (271), a size of each of the third limiting portions (273) gradually decreases in the first direction to form a third guiding slope (2731) at an end of the third limiting portion (273) away from the second housing (20), and to form a fourth guiding slope (2732) at an end of the third limiting portion (273) near the second housing (20); and
in a direction where one of the second limiting portions (272) towards another one of the second limiting portions (272), a size of each of the third limiting portions (273) gradually decreases in the first direction to form a third guiding slope (2731) at an end of the third limiting portion (273) away from the second housing (20), and to form a fourth guiding slope (2732) at an end of the third limiting portion (273) near the second housing (20).

15. The protective package device according to claim 1, wherein the first receiving chamber (13) is configured for allowing the device to be protected to be received into the first receiving chamber (13) from a first direction; the first housing (10) is capable of being assembled to the second receiving chamber (25) from an opposite direction of the first direction; and the at least one storage unit (27) is configured for allowing the at least one card (40) to be received into the at least one storage unit (27) from the opposite direction of the first direction.
